(19) Europäisches Patentamt
European Patent Office
Office européen des brevets

(11) Veröffentlichungsnummer: **0 148 497**
**B1**

(12) **EUROPÄISCHE PATENTSCHRIFT**

(45) Veröffentlichungstag der Patentschrift: **31.10.90**

(21) Anmeldenummer: **84116297.7**

(22) Anmeldetag: **24.12.84**

(51) Int. Cl.⁵: **G 01 N 21/64,** G 01 N 21/51, G 01 N 21/63

(54) **Vorrichtung zum Führen und Sammeln von Licht in der Fotometrie od. dgl.**

(30) Priorität: **24.12.83 DE 3347080**

(43) Veröffentlichungstag der Anmeldung:
**17.07.85 Patentblatt 85/29**

(45) Bekanntmachung des Hinweises auf die Patenterteilung:
**31.10.90 Patentblatt 90/44**

(84) Benannte Vertragsstaaten:
**AT BE CH DE FR GB IT LI LU NL SE**

(56) Entgegenhaltungen:
**GB-A-1 520 861**
**GB-A-2 027 193**
**US-A-3 946 239**

**APPLIED SPECTROSCOPY, Band 33, Nr. 2, März-April 1979, Seiten 166-168; G.L. WALBEN et al.: "Comparison of ellipsoidal and parabolic mirror systems in fluorimetry and room temperature phosphorimetry**

(73) Patentinhaber: **INOTECH AG**
**Zentralstrasse 34**
**CH-5610 Wohlen (CH)**

(72) Erfinder: **Oetliker, Hans, Dr. med.**
**Gartenstrasse 5**
**CH-3074 Muri (CH)**
Erfinder: **Winiger, Peter**
**Farnbühlstrasse 12**
**CH-5610 Wohlen (CH)**
Erfinder: **Stempfel, Sonja**
**Stüssistrasse 91**
**CH-8057 Zürich (CH)**

(74) Vertreter: **Hiebsch, Gerhard F., Dipl.-Ing.**
**Erzbergerstrasse 5A Postfach 464**
**D-7700 Singen 1 (DE)**

EP 0 148 497 B1

**Beschreibung**

Die Erfindung betrifft eine Vorrichtung zum Sammeln eines von einer Lichtquelle ausgehenden Lichtstrahles zum Messen eines Meßgutes, das von Lichtstrahl getroffen wird, und das im Brennpunkt einer als Rotationsparaboloid ausgebildeten Reflexionsfläche angeordnet ist und die davon ausgehende Strahlung an der Reflexionsfläche des Rotationsparaboloides gebrochen wird, wobei ein Lichtdetektor die vom Meßgut ausgehenden Strahlen über ein Reflektorensystem aufnimmt.

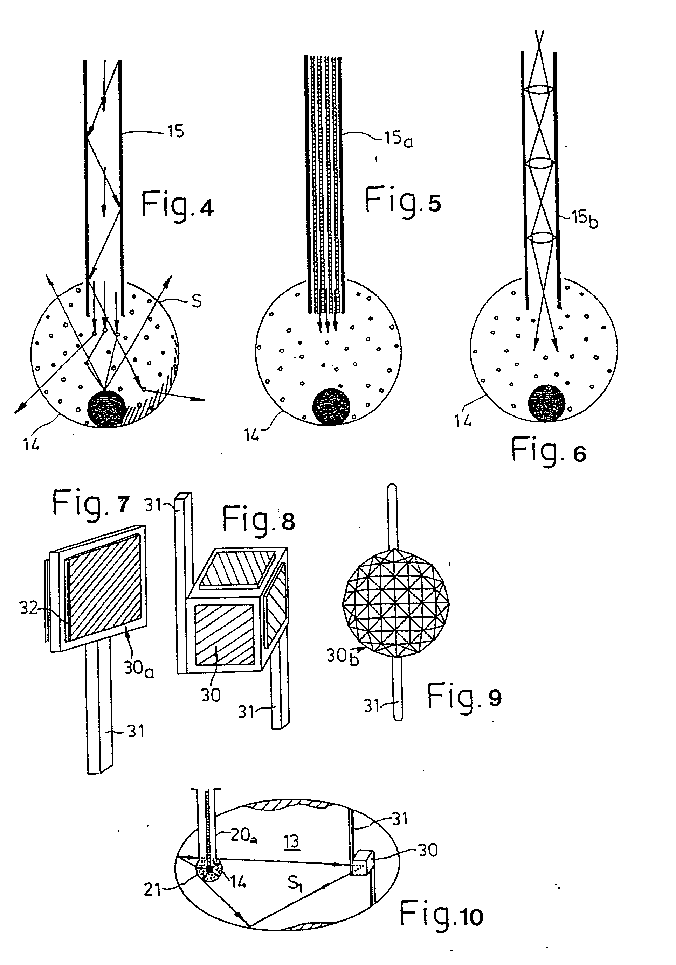

Eine Vorrichtung dieser Art ist aus der Fig. 6 der GB—PS 20 27 193 bekannt.

Nach dieser GB—PS 20 27 193 werden Lichtstrahlen, von der Lichtquelle kommend, über ein Linsensystem, eine opaque Schranke mit Loch und einen dichroitischen Reflektor einem außerhalb der gesamten Anordnung liegenden Lichtdetektor zugeführt. Diese Anordnung ist sehr umständlich, birgt Verluste in sich und ist auch sehr aufwendig, insbesondere in ihrem Raumbedarf.

Ausgehend von diesem Stand der Technik liegt der Erfindung die Aufgabe zugrunde, eine kompaktere und einfachere Anordnung bei einem Rotationsparaboloid zu schaffen, wobei bevorzugt auf eine Parallelführung der austretenden, zum Detektor führenden Strahlung Wert gelegt wird und sich ein Linsensystem erübrigen soll.

Zur Lösung dieser Aufgabe führt, daß das Rotationsparaboloid geschnitten und der so entstanden Öffnung eine ringförmige Fläche als Ausschnitt eines zweiten Rotationsparaboloides zugeordnet ist, das zur Hauptachse des ersten Rotationsparaboloides zentriert ist und dessen Brennpunkt im umhüllenden ersten Rotationsparaboloid liegt. Es ergibt sich dadurch eine äußerst kompakte Anordnung für die Messung des Meßgutes, wobei der Detektor hierbei im Brennpunkt des umhüllenden ersten Rotationsparaboloides anzuordnen ist.

Eine besondere Weiterbildung ist im Anspruch 2 gekennzeichnet, wonach im Brennpunkt des zweiten Rotationsparaboloides der Brennpunkt eines dritten Rotationsparaboloides im umhüllenden ersten Rotationsparaboloid liegt, wobei die Meßstrahlen durch eine Ringöffnung des zweiten Rotationsparaboloids in Parallelführung einem außerhalb liegenden Lichtdetektor zuführbar sind.

Besondere Weiterbildungen sind in den Ansprüchen 3 bis 5 gekennzeichnet.

Demnach ist eine Meßküvette für das Meßgut vorgesehen, die einen kugeligen Aufnahmeteil oder — wahlweise — eine Durchflußküvette für das Meßgut aufweist. Die jeweilige Meßküvette ist im Brennpunkt des umhüllenden ersten Rotationsparaboloides angeordnet.

In einer Weiter bildung kann eine Lichtleitung zu einer Streukugel in der Meßküvette führen, die ein einfacher oder ein multipler Lichtleiter sein kann. Es kann aber eine Lichtleitung zu einer Streukugel in der Meßküvette so ausgebildet sein, daß sie ein Linsenfokussiersystem aufweist; oder es kann im Brennpunkt des umhüllenden ersten Rotationsparaboloides eine sogenannte Liquid Scintillation Vial vorgesehen sein. In einer besonderen Weiterbildung ist die Lichtleitung außerhalb des Meßblockes an einer Halteeinrichtung festgelegt und zwar gegebenenfalls mit ihrem Leitungshaupt und über dieses Leitungshaupt mit einer Lichtführung an die Lichtquelle angeschlossen.

Lumineszenzmessungen werden heute hauptsächlich im Bereich klinischer Forschung und Analytik angewandt. Die Untersuchungsmethoden finden aber ihre Grenzen an der ungenügenden Sensibilität von Routine-Meßgeräten, wie sie zur Messung physiologischer Konzentrationen im biologisch klinischen Bereich notwendig sind. Große Anstrengungen werden heute unternommen, die ein Gesundheitsrisiko für das Laborpersonal darstellenden Radioimmunoassays (RIA) zu ersetzen durch Fluoreszenzimmunoassays (FIA). FIA's stellen eine Methode dar, die in ihrer theoretischen Sensibilität vergleichbar sind mit RIA's aber mangels geeigneter Routinegeräte nie den erwarteten Durchbruch im Labor erfahren haben. Die vorliegende Erfindung soll zur Verbesserung einen Beitrag leisten.

Sehr schwache und vor allem unpräzise Signale treten auch bei Absorptionsmessungen von stark lichtstreuenden Medien auf. Da konventionelle Fotometer nur das geradlinig durch die Meßprobe laufende Licht und dessen Abschwächung erfassen, ist es oft unmöglich, die eigentliche Lichtabsorption solcher Medien zu messen. Streulichtprobleme treten bei Absorptionsmessungen kolloidähnlicher Stoffe wie fotographischer Emulsionen, Lösungen mit Maktromolekülen oder Polymeren, oder öliger Flüssigkeiten auf.

Mit den Vorrichtungen nach der Erfindung wird für diese Mängel Abhilfe geschaffen, und es soll das Führen und Sammeln des Lichtes ohne Verlust qualitativer Meßmöglichkeiten quantitativ optimiert werden.

Die Erfindung beruht im Prinzip darauf, daß der einfallende Meßstrahl von der Intensität $I_0$ in den Brennpunkt jenes reflektierenden Rotationsparaboloides — oder an dieses angenäherter Formen — mit Hilfe von Lichtleitern oder optischen Fokussiermethoden eingebracht wird und dort das meßgut passiert. Der Detektor oder ein zur Lichtsammlung geeigneter Körper befindet sich im Brennpunkt des zweiten Rotationsparaboloides, wo praktisch 100% des aus der Probe wieder austretenden Lichtes gesammelt werden können. Dies bedeutet gegenüber konventionellen Lichtführungseinrichtungen eine große Verbesserung, solange das Ziel darin besteht, möglichst quantitativ die von der Probe — sekundär — ausgehende Strahlung zu erfassen. Möchte man aber das Meßlicht einer qualitativen, spektralen Analyse unterwerfen, ergeben sich durch den Umstand, daß das Licht praktisch aus allen Richtungen des Raumes auf den Brennpunkt des zweiten Rotationsparaboloides auftrifft, Meßprobleme. Diese Probleme werden in Weiterbildung mit Hilfe eines zugeordneten Systems eines dritten Reflexionsparaboloides gelöst, wobei das zweite Paraboloid einen zentralen ringförmigen Ausschnitt aufweist, durch den das parallelisierte Meßlicht zur quantitativen Erfassung hindurchtreten und der spektralen Analyse zugänglich gemacht werden kann.

Diese zugeordneten Parabolspiegel parallelisieren oder focussieren das Meßlicht auf einem Öffnungswinkel der Wahl ohne Anwendung von Linsensystemen, wodurch das Problem der chromatischen Aberration von Linsensystemen umgangen werden kann.

Die Erfindung ist primär anwendbar auf alle fotometrischen Einrichtungen, die Lumineszenzerscheinungsen messen — wie z.B. Phosphoreszenz, Fluoreszenz, Liquid Scintillation Counting —, wobei es die Meßeinrichtung erlaubt, gleichzeitig, Fluoreszenzmmissionen mit sehr hoher Ausbeute, Streuung und Absorption des Anregungslichtes und spektrale Analyse des emittierten Fluorszenzlichtes durchzuführen.

Die effizienteste und zugleich einfachste Meßverbesserung im Bereich der Luminometrie kann nur durch ein verbessertes Lichtführ- und Lichtsammelsystem erreicht werden. Hierzu weist die Erfindung drei Verbesserungen auf:

a) durch die Möglichkeit der Verstrahlung des Primärlichtes direkt im Zentrum des Meßgutes wird eine deutliche Verminderung der Eigen-Absorption der Anregungsenergie erreicht;

b) durch das rotationsparaboloide Lichtsammelsystem wird die Lichtausbeute des Meßlichtes etwa um den Faktor 50 bis 100 verbessert;

c) durch das zugeordnet System von Reflexionsparaboloiden werden konventionelle qualtitative Meßmöglichkeiten mit optimaler quantitativer Lichtausbeute kombiniert.

Eine weitere Anwendung der Erfindung liegt in der Nephelometrie. Die Nephelometrie ist ein Verfahren der quantitativen Analyse von Lösungen trübender Stoffe mit Hilfe der Messung der Intensität des Streulichtes (Tyndallometrie) oder mit Hilfe der Messung der scheinbaren Extinktion (Trübungsmessung). Die vorliegende Erfindung erlabut es, routinemäßig beide Messungen gleichzeitig vorzunehmen, umd die Werte im Vergleich zueinander abzusichern. Im Bereich der Streulichtmessung wird außerdem eine deutliche Meßverbesserung durch das Erfassen des gesamten Streulichtes erreicht. Dadurch können geringe Streuungen oder Streufaktoränderungen von festen, flüssigen oder gasförmigen Stoffen und deren Mischungen oder Übergänge wie z.B. Emulsionen, Streufaktoränderungen von Zellstrukturen oder deren Komponenten in Kulturlösungen oder die Streufaktoränderungen beim Wachstum von Bakterien und Hefen besser gemessen werden. Zur Nephelometrie wird die vorliegende Erfindung folgendermaßen modifiziert: der eintretende Meßstrahl wird geradlinig (90° zur Längsachse) durch das Rotationsparaboloid hindurchgeführt, lediglich im Brennpunkt unterbrochen von der Probenkammer. Das von der Probe nicht gestreute Licht wird geradlinig dem Eintrittsort gegenüber gemessen, während das gestreute Licht mit Hilfe eines Detektors im Brennpunkt des zweiten Rotationsparaboloides gemessen wird.

Die vorliegende Erfindung ist auch für fotochemische Anwendungen einsetzbar. Viele chemische Reaktionen können durch Licht ausgelöst werden. Dabei müssen die Moleküle der reagierenden Substanz ein oder mehrere Lichtquanten unter definierten Bedingungen aufnehmen. Im vorliegenden Falle wird das Licht mittels Lichtleiter oder durch das Einbringen einer Lampe im Brennpunkt des umhüllenden Rotationsparaboloides verstrahlt. Im gegenüberliegenden Brennpunkt des zweiten Rotationsparaboloides wird das Meß- oder Reaktionsgut in definierter Menge mittels statischer Anordnung oder dynamisch mittels Flow-Zellen während einer definierten Zeit der allseitigen Bestrahlung ausgesetzt.

Es wird also eine neue Lichtführung zur Anwendung in der gesamten Fotometrie angeboten, also etwa für

a) Fluoreszenzmessungen;

b) Diffraktionsmessungen; Nephelometrie;

c) Absorptionsmessungen;

d) jegliche Lumineszenzmessungen;

e) Kinetikmessungen bei der Anwendung nach lit. a) bis d);

f) Liquid Scintillation Counting;

g) fotochemische Prozesse;

h) linsenfreie Parallelisierung oder Focussieren mit hohem Raumwinkelanteil von Licht aus Licht emittierenden Meßproben oder beliebiger anderer Lichtquellen.

Das Licht wird — moduliert oder unmoduliert — direkt ins Innere des Meßgutes gebracht, z.B. durch

. einfache, multiple, modifizierte Lichtleiter,

.. Linsenfokussierung,

... Spiegelfokussierung.

Das erfindungsgemäße Lichtsammelsystem in der Fotometrie führt dazu, daß nach Passieren des Meßgutes das Licht unter Ausnützung des praktisch vollen Raumwinkels (ungefähr 4Pi) vollständig oder partiell gesammelt wird, wobei das Sammelsystem die Probe in Form eines Rotationsparaboloides in angenäherter oder teilweiser Ausführung dreidimensional umgibt.

Auch werden mit der Erfindung neue Detektoren für paraboloidförmige Lichtsammelsysteme vorgestellt, die — kugelförmig, würfelförmig oder angenähert bzw. teilweise kugel- oder würfelförmig — in Brennpunkt des Rotationsparaboloides angebracht sind. Im Brennpunkt des zweiten Rotationsparaboloides kann für bestimmte Anwendungen ein oben genannter Lichtsammelkörper mit anschließender Lichtleitung zum Detektor verwendet werden.

Die Erfindung wird in der nachfolgenden Beschreibung bevorzugter Ausführungsbeispiele sowie anhand der Zeichnung näher erläutert; diese zeigt in schematisierten Prinzipskizzen in

Fig. 1: einen Längsschnitt durch eine Ausführungsform einer Meßkammer mit einem Rotationsparaboloid sowie zwei zugeordneten Reflexionsparaboloiden.

Fig. 2: eine Schrägsicht auf einen geschnittenen Meßblock einer Fluoreszenzmeßvorrichtung mit einer eine Lichtleitung in der Küvette sowie einen Detektor enthaltenden Meßkammer, die als Rotationsellipsoid ausgebildet ist;

Fig. 3: einen Querschnitt durch den Meßblock etwa nach Linie III—III Fig. 2;

Fig. 4 bis Fig. 6: unterschiedliche Formen der gegenüber Fig. 2 vergrößert wiedergegebenen Lichtleitung;

Fig. 7 bis Fig. 9: verschiedene Ausführungsformen des Detektors jeweils in Schrägsicht;

Fig. 10 bis Fig. 13: unterschiedliche Formen von Küvetten;

Fig. 14: eine besondere Ausgestaltung der Meßkammer zur Fotoaktivierung von chemischen Prozessen.

Verschiedene Ausführungsbeispiele werden im Zusammenhang mit rotationselliptischen Spiegelsystemen beschrieben. Solche Anordnungen sind jedoch nicht Gegenstand der Anmeldung. Die entsprechenden Merkmale sind daher auf Systeme gemäß den Ansprüchen mit Rotationsparaboloiden zu übertragen.

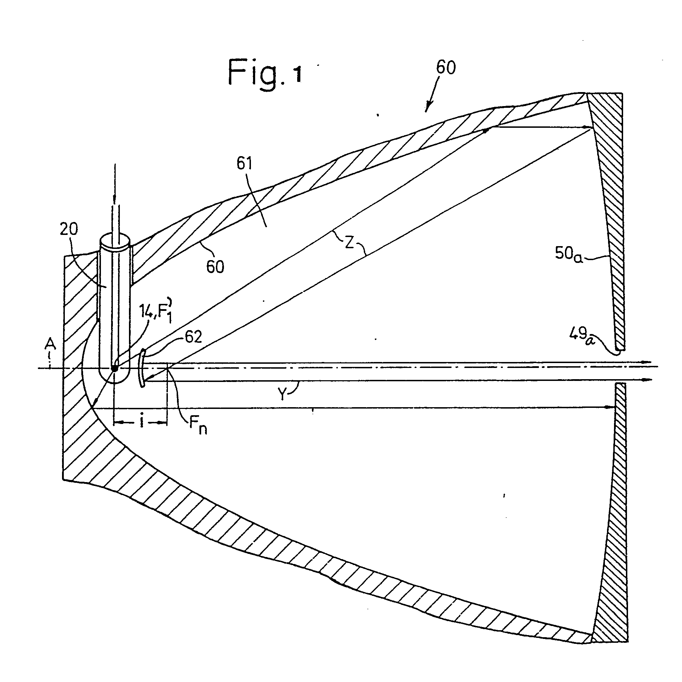

Nach Fig. 1 ist eine ohne Linsensystem arbeitendes Rotations-Reflexions-Spiegelsystem vorgeshen. Dort ist ein Rotationsparaboloid 60 vorgesehen, dessen Öffnung von einem gegenläufig gekrümmten Parabolspiegel $50_a$ überspannt ist. Dieser umgibt ringförmig eine zentrische Öffnung $49_a$, der im Innenraum 61 ein kleiner voller Parabolspiegel 62 gegenüberliegt.

Im Abstand i von Brennpunkt $F'_1$ des Rotationsparaboloid 60 liegt der Brennpunkt $F_n$ beider Parabolspiegel $50_a$ und 62. Von der Küvette 20 ausgehende Strahlen z werden von Rotationsparaboloid 60 zum Parabolspiegel $50_a$ und von diesem zum vollen Parabolspiegel 62 gelenkt. Von letzterem gelangen sie als Strahlen Y parallel zu einem Monochromator oder — nach Passieren eines nicht dargestellten Prismas — zu einem Fotodiodem-Aray, welcher rechts außerhalb des Figurenrandes vorzustellen ist.

Dieses System kann auch im umgekehrten Richtungssinn Verwendung finden, falls es darum geht, sehr eng kollimiertes Licht — wie Laserstrahlen — aus einem möglichst großen Raumwinkel auf eine Probe zu bringen.

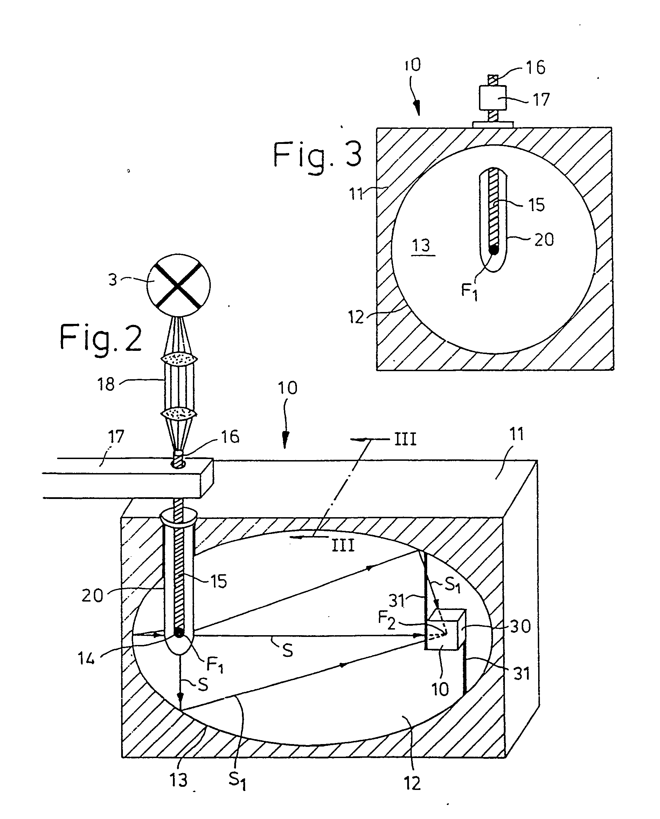

Den Aufbau eines zweiten Ausführungsbeispiels eines Meßblockes 10 für Fluoreszenzmessungen gibt Fig. 2 wieder; in dessen Gehäuse 11 ist ein Meßkammer 12 mit Reflexionsfläche 13 in Form eines Rotationsellipsoids untergebracht, in dessen linkem Brennpunkt $F_1$ eine Streukugel 14 als Ende einer Lichtleitung 15 angeordnet ist.

Die Lichtleitung 15 — nach Fig. 2 bis 4, ein einfacher Lichtleiter, nach Fig. 5 ein multipler Lichtleiter $15_a$ sowie nach Fig. 6 eine Linsenfokussiereinrichtung $15_b$ — lagert außerhalb des Gehäuses 11 mit einem Leitungshaupt 16 an einer Halterung 17. Von einer Lichtquelle 3 gehen Primärstrahlen in einer Lichtführung 18 oberhalb der Halterung 17 zum Leitungshaupt 16 der Lichtleitung 15.

Innerhalb der Meßkammer 12 ist nach Fig. 2 bis 4 die Lichtleitung 15 mit ihrer Streukugel 14 von einer Normalküvette 20 umgeben. Im anderen Brennpunkt $F_2$ der Meßkammer 12 bzw. der Reflexionsfläche 13 ist im Beispiel der Fig. 2, 3, 8 ein Detektor 30 an Haltestegen 31 angeordnet, der die von jener Streukugel 14 ausgehenden Strahlen S sowohl direkt wie auch als an der Reflektionsfläche 13 gebrochen Strahlen $S_1$ aufnimmt.

Die Ausbildung der Lichtleitung 15 und ihres zugehörigen Teiles wurde hier im Zusammenhang mit der Ausführungsform eines Rotationsellipsoides nach Fig. 2 erläutert. Es ist für den Fachmann selbstverständlich, diese Teile auf die Ausführungsform eines Rotationsparaboloides nach Fig. 1 zu übertragen.

Die Ausgestaltung des Detektors 30 kann würfelförmig (Fig. 2, 8) plattenartig ($30_a$ in Fig. 7) oder nach Fig. 9 als vielflächiger Kugelkörper $30_b$ gewählt sein. Für bestimmte Anwendungsgebiete ist der Detektor 30 mit einer für Licht partiell selektiv durchlässigen Schicht 32 ausgerüstet.

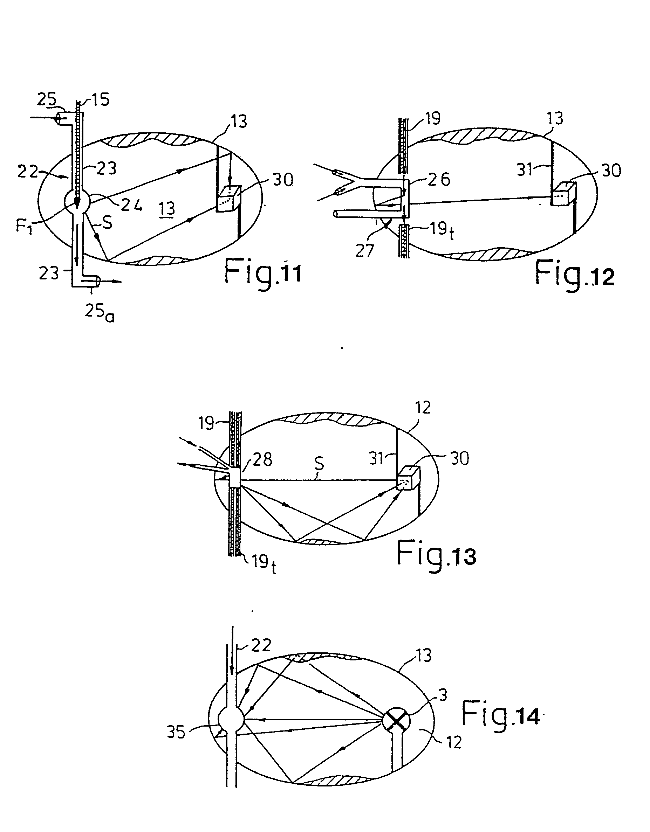

Fig. 10 gibt eine Küvette $20_a$ zum Messen der Lichtabsorption mit kugeligem Küvettende 21 wieder. Fig. 11 zeigt eine Durchflußküvette 22 zu gleichen Zweck mit koaxial zueinander gerichteten L-förmigen Rohramen 23, die einends in einen Kugelkörper 24 münden und deren andere Enden als Eingang 25 bzw. Ausgang $25_a$ zueinander gegenläufig sowie achsparallel abgewinkelt sind. Eingang 25 und Ausgang $25_a$ können auch gegeneinander ausgetauscht sein.

Das Mittelstück 26 einer U-förmigen sog. "STOP AND FLOW"-Küvette 27 nach Fig. 12 zur Messung kinetischer Vorgänge ist koaxial zwischen einen oberen Lichtleiter 19 und einen unteren Lichtleiter $19_t$ eingebracht, welche eine geradlinige Lichtführung bewirken und den Abgang eines Lichtanteils durch den unteren Lichtleiter $19_t$ ermöglichen.

Mit der Meßkammer 12 nach Fig. 13 können gestreute und ungestreute Lichtanteile einer Probe (Nephelometrie) gemessen werden; eine quaderartige Normalküvette 28 ruht zwischen Lichtleitern 19, $19_t$ mit geradliniger Lichtführung durch die Meßprobe.

Auch hier wurde die Ausbildung des Detektors 30 und der Küvetten im Zusammenhang mit einem Rotationselliopsoid als Reflexionsfläche erläutert. Die Übertragung dieser Teile auf ein Rotationsparaboloid nach Fig. 1 bietet dem Fachmann keine Schwierigkeiten.

Zur Fotoaktivierung von chemischen Prozessen ist nach Fig. 14 die Lichtquelle 3 in einem Brennpunkt eines Rotationellipsoides angebracht; im anderen Brennpunkt befindet sich eine Reaktionszelle 35. Das Reaktionsgut wird hier kontinuierlich durch den einen Brennpunkt geführt und dort allseitig einer definierten Beleuchtung ausgesetzt. Auch hier bietet die Übertragung der Anordnung auf eine Rotationsparaboloid nach Fig. 1 keine Schwierigkeiten.

**Patentansprüche**

1. Vorrichtung zur optischen Untersuchung eines Meßguts (14) mit einer Lichtquelle, einer als Rotationsparaboloid (60) ausgebildeten Reflexionsfläche, einem Lichtdetektor sowie einem Reflektorensystem, wobei das Meßgut (14) im Brennpunkt $(F'_1)$ des Rotationsparaboloids (60) angeordnet ist und die Anordnung von Lichtquelle, Rotationsparaboloid (60), Reflektorsystem und Detektor so ist, daß entweder die vom Meßgut (14) ausgehende Strahlung an der Reflexionsfläche des Rotationsparaboloids reflektiert wird und über das Reflektorensystem auf den Detektor geleitet wird, oder das von der Lichtquelle ausgehende Licht über das Reflektorensystem und die Reflexionsfläche des Rotationsparaboloids (60) auf das Meßgut geleitet wird, dadurch gekennzeichnet, daß das Rotationsparaboloid (60) geschnitten und der so entstandenen Öffnung eine ringförmige Fläche als Ausschnitt eines zweiten Rotationsparaboloides $(50_a)$ zugeordnet ist, das zur Hauptachse der ersten Rotationsparaboloides (60) zentriert ist und dessen Brennpunkt $(F_n)$ im umhüllenden ersten Rotationsparaboloid (60) liegt.

2. Vorrichtung nach Anspruch 1, dadurch gekennzeichnet, daß im Brennpunkt $(F_n)$ des zweiten Rotationsparaboloides $(50_a)$ der Brennpunkt eines dritten Rotationsparaboloides (62) im umhüllenden ersten Rotationsparaboloid (60) liegt, und daß die Meßstrahlen durch eine Ringöffnung $(49_a)$ des zweiten Rotationsparaboloides $(50_a)$ in Parallelführung einem außerhalb liegenden Lichtdetektor zuführbar sind.

3. Vorrichtung nach einem der Ansprüche 1 oder 2, dadurch gekennzeichnet, daß eine Meßküvette (20, 22) vorgesehen ist, die einen kugeligen Aufnahmeteil (21, 24, 35) oder eine Durchflußküvette (22, 27) für das Meßgut aufweist, die im Brennpunkt $(F'_1)$ des umhüllenden ersten Rotationsparaboloides (60) angeordnet sind.

4. Vorrichtung nach Anspruch 3, dadurch gekennzeichnet, daß eine Lichtleitung zu einer Streukugel (14) in der Meßküvette (20, $20_a$, 22, 27, 28, 29) führt, die ein einfacher oder ein multipler Lichtleiter (15 bzw. $15_a$) ist, oder daß eine Lichtleitung (15) zu einer Streukugel (14) in der Meßküvette (20, $20_a$, 22, 27, 28, 29) ein Linsenfokussiersystem aufweist, oder daß im Brennpunkt $F'_1$) des umhüllenden ersten Rotationsparaboloides (60) eine sogenannte Liquid Scintillation Vial (29) vorgesehen ist.

5. Vorrichtung nach Anspruch 4, dadurch gekennzeichnet, daß die Lichtleitung (15) außerhalb des Meßblockes (10) an einer Halteeinrichtung (17) festgelegt ist, wobei gegebenenfalls die Lichtleitung (15) mit ihrem Leitungshaupt (16) festgelegt und über dieses mit einer Lichtführung (18) an die Lichtquelle (3) angeschlossen ist.

**Revendications**

1. Dispositif pour l'étude optique d'un produit objet d'une mesure (14) comportant une source lumineuse, une surface réfléchissante ayant la forme d'un paraboloïde de révolution (60), un détecteur de lumière ainsi qu'un système de réflecteurs, dispositif dans lequel le produit objet de la mesure (14) est disposé au foyer $(F'_1)$ du paraboloïde de révolution (60) et dans lequel la disposition de la source lumineuse, de paraboloïde de révolution (60), du système de réflecteurs et du détecteur est telle que ou bien le rayonnement partant du produit objet de la mesure (14) est réfléchi sur la surface réfléchissante du paraboloïde de révolution puis envoyé sur le détecteur par l'intermédiaire du système de réflecteurs, ou bien la lumière partant de la source lumineuse est envoyée sur le produit objet de la mesure par l'intermédiaire du système de réflecteurs et de la surface réfléchissante du paraboloïde de révolution (60) caractérisé en ce que la paraboloïde de révolution (60) est tronqué et qu'à l'ouverture qui en résulte correspond une surface annulaire qui est une portion d'un second paraboloïde de révolution $(50_a)$ qui est centré par rapport à l'axe principal du premier paraboloïde de révolution (60) et dont le foyer $(F_n)$ se trouve dans le premier paraboloïde de révolution (60), qui fait enveloppe.

2. Dispositif selon la revendication 1, caractérisé en ce qu'au foyer $(F_n)$ du second paraboloïde de révolution $(50_a)$ est situé le foyer d'un troisième paraboloïde de révolution (62) situé dans le premier paraboloïde de révolution (60), qui fait enveloppe, et en ce que les faisceaux de mesure peuvent être amenés, en guidage parallèle, à un détecteur de lumière situé à l'extérieur, en passant par une ouverture annulaire $(49_a)$ du second paraboloïde de révolution $(50_a)$.

3. Dispositif selon l'une des revendications 1 ou 2, caractérisé en ce qu'il est prévu une cuvette de mesure (20, 22) qui présente, pour le produit objet de la mesure, un réceptacle sphérique (21, 24, 35) ou une cuvette de passage (22, 27) qui sont disposés au foyer $(F'_1)$ du premier paraboloïde de révolution (60) qui fait enveloppe.

4. Dispositif selon la revendication 3, caractérisé en ce qu'un conducteur optique, qui est un conducteur optique simple ou un conducteur optique multiple (15 ou $15_a$), conduit à une sphère de diffusion (14) qui se trouve dans la cuvette de mesure (20, $20_a$, 22, 27, 28, 29), ou bien en ce qu'un conducteur optique (15) qui conduit à une sphère de diffusion (14) qui se trouve dans la cuvette de mesure (20, $20_a$, 22, 27, 28, 29) présente un système de focalisation par lentilles, ou bien en ce qu'au foyer $(F'_1)$ du premier paraboloïde de révolution (60) qui fait enveloppe est prévu un flacon à scintillation de liquide (29).

5. Dispositif selon la revendication 4, caractérisé en ce que le conducteur optique (15) est fixé à l'extérieur du bloc de mesure (10), à un mécanisme support (17), le conducteur optique (15) étant éventuellement fixé par sa tête de conducteur (16) et relié par l'intermédiaire de celle-ci à la source lumineuse (3) au moyen d'un guide optique (18).

**Claims**

1. Apparatus for optical investigation of a material (14) to be measured, comprising a light source, a reflection surface which is in the form of a paraboloid (60) of revolution, a photodetector and a reflector system, wherein the material (14) is arranged at the focal point ($F'_1$) of the paraboloid (60) of revolution and the arrangement of light source, paraboloid (60) of revolution, reflector system and detector is such that either the radiation from the material (14) is reflected at the reflection surface of the paraboloid of revolution and is passed by way of the reflector system onto the detector or the light from the light source is passed by way of the reflector system and the reflection surface of the paraboloid (60) of revolution onto the material (14), characterised in that the paraboloid (60) of revolution is cut and associated with the resulting opening in an annular surface as a section from a second paraboloid ($50_a$) of revolution which is centered with respect to the principal axis of the first paraboloid (60) of revolution and the focal point ($F_n$) of which lies in the enclosing first paraboloid (60) of revolution.

2. Apparatus according to claim 1 characterised in that the focal point of a third paraboloid (62) of revolution lies in the enclosing first paraboloid (60) of revolution at the focal point ($F_n$) of the second paraboloid ($50_a$) of revolution and that the measuring beams can be passed in parallel relationship to an extremely disposed photodetector through an annular opening ($49_a$) in the second paraboloid ($50_a$) of revolution.

3. Apparatus according to one of claims 1 and 2 characterised in that there is provided a measurement vessel (20, 22) which has a spherical receiving portion (21, 24, 35) or a through-flow vessel (22, 27) for the material to be measured, which are arranged at the focal point ($F'_1$) of the enclosing first paraboloid (60) of revolution.

4. Apparatus according to claim 3 characterised in that a light guide leads to a scatter ball (14) in the measurement vessel (20, $20_a$, 22, 27, 28, 29) which is a single or a multiple optical fibre (15 or $15_a$), or that a light guide (15) to a scatter ball (14) in the measurement vessel (20, $20_a$, 22, 27, 28, 29) has a lens focusing system or that provided at the focal point ($F'_1$) of the enclosing first paraboloid (60) of revolution is what is known as a Liquid Scintillation Vial (29).

5. Apparatus according to claim 4 characterised in that the light guide (15) is fixed outside the measuring block (10) to a holding means (17), wherein optionally the light guide (15) is fixed with its top (16) and is connected by way of same with a light guiding means (18) to the light source (3).

# Fig. 1

Fig. 3

Fig. 2

Fig. 4

15

S

14

Fig. 5

15a

14

Fig. 6

15b

14

Fig. 7

31

32

30a

30a

31

Fig. 8

31

30

31

Fig. 9

30b

31

20a    13

31

21    14    S₁    30

Fig. 10

EP  0 148 497  B1

Fig.11

Fig.12

Fig.13

Fig.14